# EUROPÄISCHE PATENTSCHRIFT

(11) **EP 0 927 667 B1**
(45) Veröffentlichungstag und Bekanntmachung des Hinweises auf die Patenterteilung: **19.03.2003**
(21) Anmeldenummer: 98121115.4
(22) Anmeldetag: 09.11.1998
(51) Int. Cl.: B60R 21/16

(54) **Seitenairbageinrichtung für ein Kraftfahrzeug**
Side airbag device for a vehicle
Dispositif de sac gonflable latéral pour un véhicule

(30) Priorität: 29.12.1997 DE 19758024
(43) Veröffentlichungstag der Anmeldung: 07.07.1999
(73) Patentinhaber: Volkswagen Aktiengesellschaft, 38436 Wolfsburg (DE)
(72) Erfinder: Sinnhuber, Ruprecht, Dipl.-Ing., 38518 Gifhorn (DE)
(74) Vertreter: Neubauer, Hans-Jürgen, Dipl.-Phys.

(56) Entgegenhaltungen:
- EP-A- 0 841 221
- WO-A-98/24661
- DE-A- 4 224 166
- DE-A- 4 306 528
- DE-U- 29 614 201
- DE-U- 29 616 904
- US-A- 5 494 313

## Beschreibung

Die Erfindung betrifft eine Seitenairbageinrichtung für ein Kraftfahrzeug nach dem Oberbegriff des Anspruchs 1, insbesondere für einen Personenkraftwagen.

Seitenairbagsysteme, die im Crashfall aktiviert werden und im Bereich zwischen einem Fahrzeuginsassen und der benachbarten Fahrzeugtür oder Seitenwand einen Airbag oder mehrere nebeneinander angeordnete Airbags mit Gas befüllen und so ein Polster zwischen dem Fahrzeuginsassen und dem jeweiligen Fahrzeugbereich ausbilden, sind bekannt. Sie werden üblicherweise im Dachrahmenbereich angeordnet und nehmen im nichtaktivierten Zustand nur sehr wenig Platz ein.

Eine derartige Seitenairbageinrichtung ist aus der EP 0 694 444 A2 bekannt. Der mit Gas befüllbare Seitenairbag ist gemeinsam mit einem Füllrohr (Lanze) entlang eines Rahmenteils im Fahrgastraum des Kraftfahrzeuges gehaltert und über das Rohr befüllbar, an dem an wenigstens einem Ende des Airbags ein Gasgenerator angeschlossen ist. Nach der DE 296 13 781 U1 kann eine Befüllung auch über ein über das Ende oder die Enden des Airbags hinausgehendes Füllrohr vorgenommen werden, wobei der Gasgenerator an einer der Säulen oder im Instrumententafelbereich angeordnet ist. Eine Ausführung sieht auch zwei getrennte Airbags vor, die jeweils über ein separates Füllrohr und einen separaten Gasgenerator befüllbar sind. Der den vorderen Airbag befüllende Gasgenerator ist im Instrumententafelbereich und der den hinteren Airbag befüllende Gasgenerator ist im Bereich der C-Säule angeordnet.

Auch die DE 296 14 201 U1 hat eine Airbagvorrichtung zum Gegenstand, bei der wenigstens ein Gasgenerator an einem sich im wesentlichen über die gesamte Länge einer Airbag-Anordnung erstreckendes Füllrohr angeschlossen ist, wobei der Gasgenerator im Bereich der A-Säule und/oder B-Säule und/oder C-Säule angeordnet sein kann.

Die gattungsgemäße DE 29616 904 U1 zeigt eine Seitenairbageinrichtung für ein Kraftfahrzeug mit wenigstens einem von einem Gasgenerator aufblasbaren Airbag, der im Dachkantenbereich der Fahrzeugkarosserie angeordnet ist und sich im aufgeblasenen Zustand fahrzeuginnenraumseitig im Wesentlichen vertikal nach unten entfaltet, wobei ein Füllrohr zwischen dem Gasgenerator und dem Airbag sowie ein die Zündung des Gasgenerators veranlassender Sensor vorgesehen ist.

Konkret ist hier ein Airbag vorgesehen, der sich im aufgeblasenen Zustand von der A-Säule bis zur C-Säule erstreckt, wobei zudem der Gasgenerator im Bereich des unteren Endes der C-Säule angeordnet ist. Die Anordnung des Gasgenerators im Bereich der C-Säule ist jedoch wegen des dort begrenzten Raumangebots problematisch. Überdies ist die Zündung des Gasgenerators stets mit einer erheblichen Geräuschentwicklung verbunden, die den in dessen unmittelbarer Nähe sitzenden Fahrzeuginsassen zusätzlich zu den Crasheinflüssen beeinträchtigen kann.

Es ist daher Aufgabe der Erfindung, eine gattungsgemäße Seitenairbageinrichtung für ein Kraftfahrzeug so weiterzubilden, dass eine durch eine Gasgenerator-Zündung negative Beeinträchtigung der Fahrzeuginsassen, insbesondere eine Lärmbeeinträchtigung, minimiert oder ausgeschlossen wird.

Diese Aufgabe wird mit den Merkmalen des Patentanspruchs 1 gelöst.

Gemäß Anspruch 1 ist das Füllrohr im Bereich der C-Säule und der Gasgenerator außerhalb der C-Säule angeordnet dergestalt, dass der Gasgenerator in einem durch eine Rücksitzlehne und eine Hutablage vom Fahrzeuginsassen getrennten Kofferraum des Kraftfahrzeuges an einem Fahrzeugaufbau- oder -ausstattungsteil angeordnet ist.

Bei einem derartigen erfindungsgemäßen Aufbau ist der Gasgenerator vorteilhaft vom Fahrzeuginnenraum und damit vom Fahrzeuginsassen abgeschottet, d.h. der Gasgenerator ist hinter dem jeweiligen Fahrzeuginsassen angeordnet und von diesem zumindest durch die Rücksitzlehne und die Hutablage getrennt, so dass eine Zündung des Gasgenerators den Fahrzeuginsassen nicht beeinträchtigt. Vorteilhaft kann mit dieser Anordnung ein bislang nicht beachteter Raum im Fahrzeug genutzt werden. Im Bereich der C-Säule ist lediglich Raum für die Anordnung des Füllrohres erforderlich.

Vorteilhaft läßt sich der Gasgenerator an der Unterseite der Hutablage anordnen.

Auch kann er im Bereich der Vorderseite des Radkastens hinter der Rücksitzlehne angeordnet sein. Ebenso kann er im Bereich des Federbeindomes auf dem Radkasten oder im Bereich der Bodengruppe angeordnet sein, vorzugsweise in einer Vertiefung oder Sicke. Überdies können der Gasgenerator und ein mit diesem gekoppelter und dessen Zündung auslösender Sensor als separate und fahrzeugunabhängige Baueinheit ausgebildet und mit einem Ansatz für das Füllrohr versehen sein. Als eine solche Baueinheit sind sie in die Hutablage oder auch in die Bodengruppe des Kofferraumes integrierbar, so daß lediglich der Airbag und das Füllrohr an den jeweiligen Fahrzeugtyp angepaßt werden müssen. Damit kann der Montageaufwand verringert werden, insbesondere wenn diese Baueinheit in Fahrzeugauf bau- oder ausstattungsteile integriert werden kann, wie das beispielsweise bei der Hutablage ohne weiteres gegeben ist. Der Sensor ist zweckmäßigerweise ein Beschleu-nigungssensor, der bei einer vorbestimmten, insbesondere crashbedingten Verzögerung anspricht und die Zündung des Gasgenerators veranlaßt.

Die Erfindung wird nachstehend an Ausführungsbeispielen erläutert. In der zugehörigen Zeichnung zeigen schematisch:
- Fig. 1:: eine Seitenairbageinrichtung mit an der Hutablage angeordnetem Gasgenerator,
- Fig. 2:: die Seitenairbageinrichtung mit am Radkasten angeordnetem Gasgenerator und
- Fig. 3:: die Seitenairbageinrichtung mit einer weiteren Gasgeneratoranordnung.

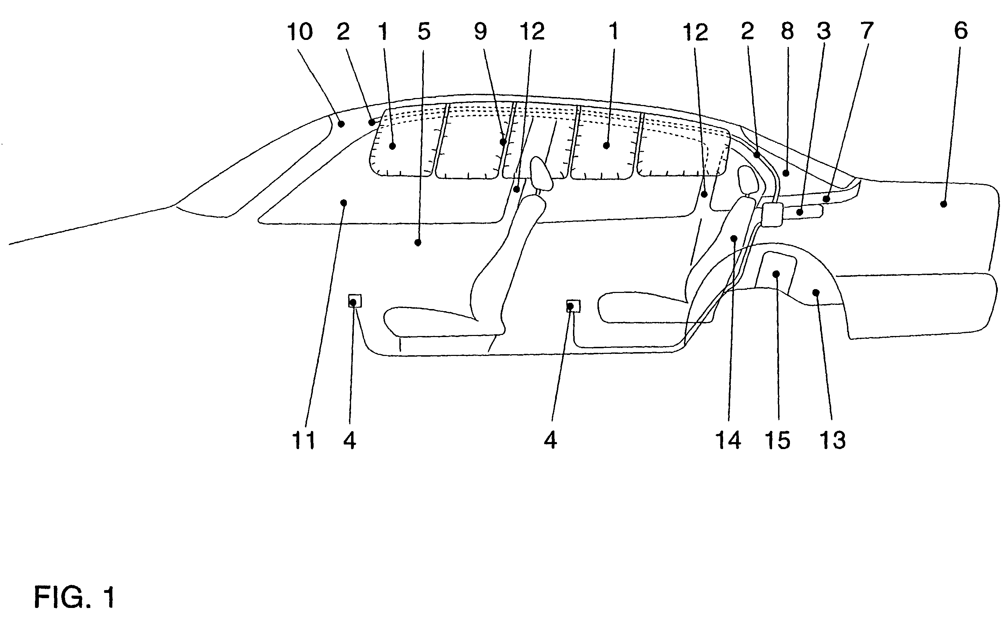

In Fig. 1 ist eine auf der Beifahrerseite eines PKW installierte und aus mehreren zusammenhängenden Airbags 1, einem Füllrohr 2, einem Gasgenerator 3 herkömmlicher Bauart und zwei mit diesem gekoppelten Sensoren 4 in den Seitentüren 5 gebildete Seitenairbageinrichtung dargestellt. Das Füllrohr 2 erstreckt sich im wesentlichen über die gesamte Fahrzeuglänge und ist in bekannter Weise gemeinsam mit den Airbags 1 im Dachkantenbereich der Fahrzeugkarosserie angeordnet, wobei die Airbags 1 das Füllrohr 2 einschließen, jedoch derart, daß die nichtbefüllten Airbags 1 fahrzeuginnenseitig vor dem im Dachkantenbereich angeordnetem Füllrohr 2 zusammengefaltet hinter einer Verblendung angeordnet sind. Das Füllrohr 2 ist mit Gasdurchtrittsöffnungen versehen und steht mit dem im Kofferraum 6 an der Unterseite der Hutablage 7 fest angeordneten Gasgenerator 3 in direkter Verbindung, wobei es durch die C-Säule 8 zu diesem geführt ist. Der Gasgenerator 3 ist in Fahrzeug längsrichtung im Grenzbereich zwischen der Hutablage 7 und dem Kotflügel an der Hutab lage 7 befestigt.

Bei einem Seitenaufprall wird der Gasgenerator, signalisiert durch wenigstens einen der Sen-soren 4, aktiviert und befüllt die Airbags 1 über das Füllohr 2, die sich, bedingt durch ihre Ge-staltung und die Anordnung von Spannbändern 9 in vertikaler Richtung vor dem Dachholm 10, den Fenstern 11 und den Säulen 8 und 12 entfalten.

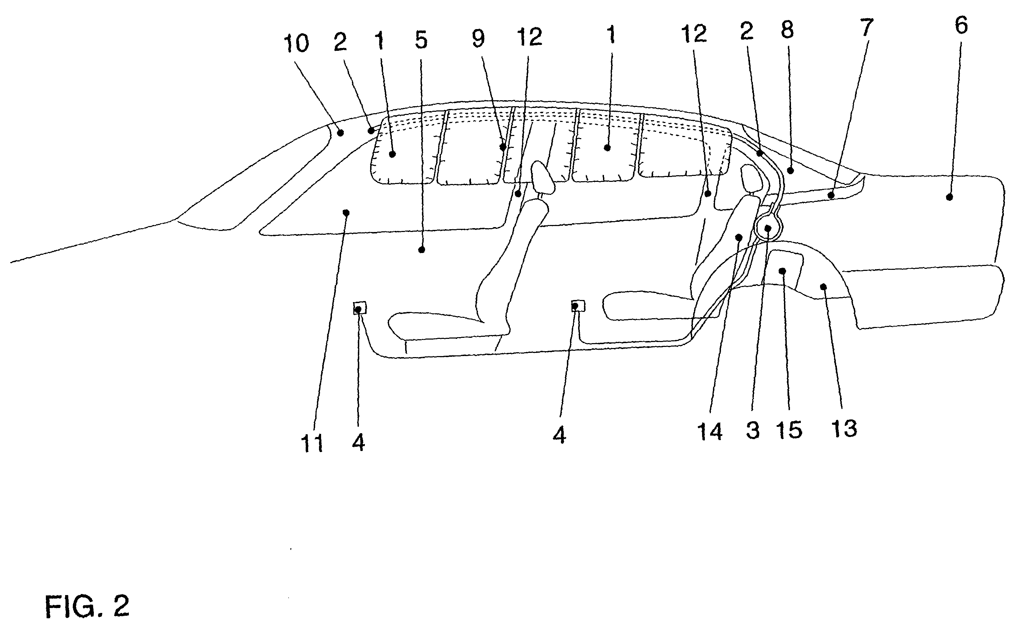

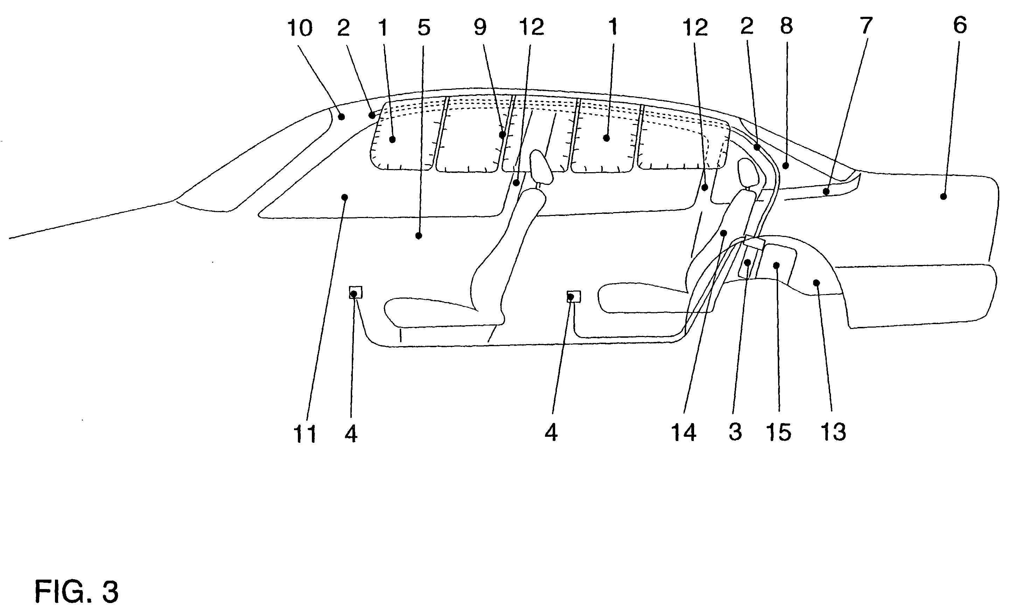

Die Fig. 2 und 3 zeigen Alternativen der Anordnung des Gasgenerators im Kofferraum. In der Ausführung gemäß Fig. 2 ist der Gasgenerator 3 auf dem Radkasten 13 hinter der Rücksitzlehne 14 quer zur Längsrichtung des Kraftfahrzeugs liegend angeordnet. In Fig. 3 ist der Gasgenerator 3 im wesentlichen stehend in Fahrzeuglängsrichtung hinter der Rücksitzlehne 14 vor den Federbeindomen 15 angeordnet.

## Patentansprüche

1. Seitenairbageinrichtung für ein Kraftfahrzeug mit wenigstens einem von einem Gasgenerator (3) aufblasbaren Airbag (1), der im Dachkantenbereich der Fahrzeugkarosserie angeordnet ist und sich im aufgeblasenen Zustand fahrzeuginnenraumseitig im wesentlichen vertikal nach unten entfaltet, mit einem Füllrohr (2) zwischen dem Gasgenerator (3) und dem Airbag (1) und mit einem die Zündung des Gasgenerators (3) veranlassenden Sensor (4),
**dadurch gekennzeichnet,**
**dass** das Füllrohr (2) im Bereich der C-Säule und der Gasgenerator außerhalb der C-Säule angeordnet ist dergestalt,
**dass** der Gasgenerator (3) in einem durch eine Rücksitzlehne (14) und eine Hutablage (7) vom Fahrzeuginsassen getrennten Kofferraum (6) des Kraftfahrzeuges an einem Fahrzeugaufbau- oder -ausstattungsteil angeordnet ist.

2. Seitenairbageinrichtung nach Anspruch 1,
**dadurch gekennzeichnet,**
**daß** der Gasgenerator (3) an der Unterseite der Hutablage (7) angeordnet ist.

3. Seitenairbageinrichtung nach Anspruch 1,
**dadurch gekennzeichnet,**
**daß** der Gasgenerator (3) am Radkasten (13) angeordnet ist, insbesondere im Bereich seiner Vorderseite.

4. Seitenairbageinrichtung nach Anspruch 2,
**dadurch gekennzeichnet,**
**daß** der Gasgenerator (3) im Bereich des Federbeindomes (15) am Radkasten (13) angeordnet ist.

5. Seitenairbageinrichtung nach Anspruch 1,
**dadurch gekennzeichnet,**
**daß** der Gasgenerator (3) im Bodenraumbereich des Kofferraumes (6) angeordnet ist.

6. Seitenairbageinrichtung nach Anspruch 1,
**dadurch gekennzeichnet,**
**daß** der Gasgenerator (3) und ein mit diesem gekoppelter Sensor (4) als Baueinheit ausgebildet sind.

7. Seitenairbageinrichtung nach Anspruch 6,
**dadurch gekennzeichnet,**
**daß** die aus Gasgenerator (3) und Sensor gebildete Baueinheit in die Hutablage (7) oder in die Bodengruppe des Kofferraumes (6) integriert ist und einen Montageansatz für das Füllrohr (2) aufweist.

8. Seitenairbageinrichtung nach Anspruch 7,
**dadurch gekennzeichnet,**
**daß** der Sensor (4) ein Beschleunigungssensor ist.

## Claims

1. Side airbag device for a motor vehicle, having at least one airbag (1) which can be inflated by a gas generator (3), is arranged in the roof edge region of the vehicle bodywork and, when inflated, is unfolded essentially vertically downwards in the vehicle interior, having a filling pipe (2) between the gas generator (3) and the airbag (1), and having a sensor (4) bringing about the ignition of the gas generator (3), **characterized in that** the filling pipe (2) is arranged in the region of the C-pillar and the gas generator is arranged outside the C-pillar in such a manner that the gas generator (3) is arranged on a vehicle body part or equipment part in a boot (6) of the motor vehicle, the boot being separated from the vehicle occupant by means of a rear seat back (14) and a rear parcel shelf (7).

2. Side airbag device according to Claim 1, **characterized in that** the gas generator (3) is arranged on the underside of the rear parcel shelf (7).

3. Side airbag device according to Claim 1, **characterized in that** the gas generator (3) is arranged on the wheel house (13), in particular in the region of its front side.

4. Side airbag device according to Claim 2,
**characterized in that** the gas generator (3) is arranged on the wheelhouse (13) in the region of the shock-absorbing strut dome (15).

5. Side airbag device according to Claim 1, **characterized in that** the gas generator (3) is arranged in the bottom region of the boot (6).

6. Side airbag device according to Claim 1, **characterized in that** the gas generator (3) and a sensor (4) coupled thereto are designed as a constructional unit.

7. Side airbag device according to Claim 6, **characterized in that** the constructional unit formed from the gas generator (3) and sensor is integrated into the rear parcel shelf (7) or into the floor assembly of the boot (6) and has a mounting lug for the filling pipe (2).

8. Side airbag device according to Claim 7, **characterized in that** the sensor (4) is an acceleration sensor.

## Revendications

1. Dispositif de sac gonflable latéral pour un véhicule avec au moins un airbag (1) gonflable par un générateur de gaz (3), qui est disposé dans la région de l'arête du toit de la carrosserie du véhicule et qui, à l'état gonflé, se déploie essentiellement verticalement vers le bas du côté de l'intérieur du véhicule, avec un tube de remplissage (2) entre le générateur de gaz (3) et l'airbag (1) et avec un détecteur (4) provoquant le déclenchement du générateur de gaz (3), **caractérisé en ce que** le tube de remplissage (2) est disposé dans la région de la colonne C et le générateur de gaz est disposé à l'extérieur de la colonne C, de telle manière que le générateur de gaz (3) soit disposé sur une pièce de structure ou d'équipement du véhicule automobile, dans un coffre à bagages (6) du véhicule automobile, séparé de l'habitacle du véhicule automobile par un dossier de siège arrière (14) et un plateau porte-chapeau (7).

2. Dispositif de sac gonflable latéral suivant la revendication 1, **caractérisé en ce que** le générateur de gaz (3) est disposé sur le côté inférieur du plateau porte-chapeau (7).

3. Dispositif de sac gonflable latéral suivant la revendication 1, **caractérisé en ce que** le générateur de gaz (3) est disposé sur le passage de roue (13), en particulier dans la région de son côté avant.

4. Dispositif de sac gonflable latéral suivant la revendication 2, **caractérisé en ce que** le générateur de gaz (3) est disposé dans la région du dôme de l'amortisseur à ressort (15) sur le passage de roue (13).

5. Dispositif de sac gonflable latéral suivant la revendication 1, **caractérisé en ce que** le générateur de gaz (3) est disposé dans la région du fond du coffre à bagages (6).

6. Dispositif de sac gonflable latéral suivant la revendication 1, **caractérisé en ce que** le générateur de gaz (3) et un détecteur (4) couplé à celui-ci constituent une unité modulaire.

7. Dispositif de sac gonflable latéral suivant la revendication 6, **caractérisé en ce que** l'unité modulaire formée par le générateur de gaz (3) et le détecteur est intégrée dans le plateau porte-chapeau (7) ou dans le groupe du fond du coffre à bagages (6) et présente un embout de montage pour le tube de remplissage (2).

8. Dispositif de sac gonflable latéral suivant la revendication 7, **caractérisé en ce que** le détecteur (4) est un détecteur d'accélération.
